# EUROPÄISCHE PATENTSCHRIFT

(11) **EP 1 910 122 B1**
(45) Veröffentlichungstag und Bekanntmachung des Hinweises auf die Patenterteilung: **08.08.2018**
(21) Anmeldenummer: 06763433.7
(22) Anmeldetag: 01.06.2006
(51) Int. Cl.: B60K 35/00, B60K 37/02, B62D 15/02, B62D 1/28, G08G 1/16, G02B 27/01

(54) **ANZEIGEVORRICHTUNG**
DISPLAY DEVICE
DISPOSITIF D'AFFICHAGE

(30) Priorität: 19.07.2005 DE 102005033641
(43) Veröffentlichungstag der Anmeldung: 16.04.2008
(73) Patentinhaber: ROBERT BOSCH GMBH, 70442 Stuttgart (DE)
(72) Erfinder: KOENIG, Winfried, 76327 Pfinztal (DE)
(86) Internationale Anmeldenummer: PCT/EP2006/062805
(87) Internationale Veröffentlichungsnummer: WO 2007/009835

(56) Entgegenhaltungen:
- EP-A- 1 327 969
- EP-A- 1 407 931
- EP-A- 1 502 815
- DE-A1- 10 242 293
- US-A- 5 987 364
- US-A1- 2002 167 589
- US-A1- 2004 183 663

## Beschreibung

### Stand der Technik

Die Erfindung geht aus von einer Anzeigevorrichtung nach der Gattung des Anspruchs 1. Aus der DE 102 42 293 A1 ist bereits ein Fahrzeugführungssystem bekannt, bei dem Umgebungsdaten des Fahrzeugs erfasst werden, um eine automatische Steuerung des Fahrzeugs zu ermöglichen. Ein erfasster Fahrkorridor des Fahrzeugs wird hierbei mittels eines Head-Up Displays auf der Windschutzscheibe vor dem Hintergrund der tatsächlichen Fahrbahn dargestellt. Das Fahrzeugsführungssystem ist dabei so ausgelegt, dass zwischen einer manuellen Steuerung und einer automatischen Steuerung des Fahrzeugs umgeschaltet werden kann.

### Vorteile der Erfindung

Die erfindungsgemäße Anzeigevorrichtung mit den Merkmalen des Anspruchs 1 und das erfindungsgemäße Verfahren mit den Merkmalen des nebengeordneten Anspruchs 7 haben demgegenüber den Vorteil, dass eine Spurmarkierung einer erfassten Fahrspur derart in einer Anzeige dargestellt wird, dass ein Fahrer unmittelbar die Qualität der Fahrspurerfassung erkennen kann. Der Fahrer kann hierdurch einerseits die Verlässlichkeit der ihm angezeigten Fahrspur erkennen. Ferner ist es möglich, dass ein Fahrer bei einer zumindest teilweisen Unterstützung der Fahrt durch ein Warnsystem oder durch eine autonome Steuerung erkennen kann, dass möglicherweise in Kürze sein Eingreifen erforderlich ist, da das automatische System die Fahrspur nicht mehr genügend erkennen kann. Er wird daher vorgewarnt, um vorbereitet zu sein, die Steuerung des Fahrzeugs gegebenenfalls wieder vollständig oder teilweise selbst zu übernehmen. Werden lediglich Warnungen ausgegeben, so erhält ein Fahrer eine Information darüber, dass möglicherweise Warnungen nicht oder unzutreffend an ihn ausgegeben werden können, wenn die Fahrspurerkennung zu schlecht wird. Ferner kann der Fahrer bei einer generell schlechteren Fahrspurerkennung auch darauf schließen, dass möglicherweise das Erfassungssystem verschmutzt oder anderweitig gestört ist. Insgesamt werden Gefahren durch einen für den Fahrer plötzlichen und damit überraschenden Ausfall einer Fahrspurerfassung vermieden, da er rechtzeitig bei einer Verschlechterung der Fahrspurerkennung vorgewarnt wird.

Durch die in den Unteransprüchen aufgeführten Maßnahmen sind vorteilhafte Weiterbildungen und Verbesserungen der in den nebengeordneten Ansprüchen angegebenen Anzeigevorrichtung und des Verfahrens zur Anzeige einer Spurmarkierung möglich. Vorteilhaft ist, eine Spurmarkierung für einen Fahrer anstelle einer tatsächlichen Spurmarkierung darzustellen. Hierdurch ist für einen Fahrer unmittelbar erkennbar, ob sich die dargestellte Spurmarkierung mit der tatsächlichen Spurmarkierung deckt. Um eine derartige Anzeige zu erleichtern, ist vorteilhaft eine Head-Up Anzeige vorhanden, in der die Spurmarkierung derart projiziert wird, dass sie für den Fahrer in dem Fahrraum vor dem Fahrzeug erscheint. Ohne den Blick vom Fahrgeschehen selbst abwenden zu müssen, kann der Fahrer in erfindungsgemäßer Weise die in die Head-Up Anzeige eingetragenen Spurinformationen erkennen.

In einer weiteren ergänzenden oder alternativen Ausführungsform ist es vorgesehen, mit einer Kamera, insbesondere einer Infrarotkamera, den Fahrraum vor dem Fahrer zu erfassen und in einer Anzeige darzustellen. Hierbei werden die Spurmarkierungen in erfindungsgemäßer Weise in das Kamerabild eingetragen. Das Kamerabild kann einerseits in einer eigenen Anzeige dargestellt werden, aber auch in die Head-Up Anzeige eingeblendet werden. Insbesondere bei der Verwendung einer Infrarot-Kamera oder eines ähnlichen Abbildungssystems ist es möglich, auch bei Nacht oder bei Nebel dem Fahrer die Fahrsituation vor dem Fahrzeug darzustellen und ihm insbesondere auch anzuzeigen, ob die Spurmarkierungen, die für den Fahrer gegebenenfalls bei den vorhandenen Lichtverhältnissen ohne die Kameraunterstützung nicht sichtbar wären, entsprechend von seinem Unterstützungssystem erkannt werden.

Weiterhin ist vorteilhaft eine Warneinheit vorgesehen, die eine Warnung dann ausgibt, wenn eine Qualität einer Fahrspurerfassung ein vorgegebenes Maß unterschreitet. In diesem Fall ist möglicherweise besondere Vorsicht des Fahrers oder sogar ein aktives Eingreifen des Fahrers erforderlich, wenn z.B. ein autonomes Unterstützungssystem abgeschaltet wird. Der Fahrer wird somit zusätzlich zu der grafischen Darstellung in der Anzeige auf die sich verschlechternde Fahrspurerfassung hingewiesen.

Es ist ferner vorteilhaft, die Qualität der Erkennung der Fahrspur durch eine entsprechende Wahl einer Farbe und/oder einer Strichart der Spurmarkierung darzustellen. Eine entsprechende Darstellung ist für einen Benutzer unmittelbar erfassbar und kann der jeweiligen Fahrspur leicht zugeordnet werden.

Weiterhin ist es vorteilhaft, die Spurmarkierung als eine Spurbegrenzungsmarkierung in die Anzeige einzutragen. Der Fahrer kann somit die Ränder der Fahrspur leicht erkennen. Weiterhin ist es vorteilhaft, eine Mitte einer Fahrspur in der Anzeige darzustellen. Der Fahrer kann hierdurch den von dem Fahrzeug zu nehmenden Weg ebenfalls gut erfassen.

Ferner ist es vorteilhaft, bei einer Verschlechterung der Fahrspurerkennung, die entsprechend bereits in der Anzeige dargestellt wird, eine Lenkung des Fahrzeugs von einer automatischen Fahrzeugführung an den Fahrer zurück zu übergeben. Indem der Fahrer bereits in der Anzeige eine entsprechende Verschlechterung der Fahrspurerkennung rechtzeitig erkennen kann, kann er sich auf die Übergabe der Lenkverantwortung bereits vorbereiten. Ferner kann in dem Fall, dass ein Fahrer eine unzulängliche Spurerkennung mittels der erfindungsgemäßen Anzeigevorrichtung erkennt, von sich aus die Steuerung wieder selbst übernehmen.

### Zeichnung

Ausführungsbeispiele der Erfindung sind in der Zeichnung dargestellt und in der nachfolgenden Beschreibung näher erläutert. Es zeigen
- Figur 1: eine schematische Darstellung eines Fahrzeugs mit einer erfindungsgemäßen Anzeigevorrichtung in Aufsicht,
- Figur 2: eine Darstellung einer Straße vor einem Fahrzeug,
- Figuren 3 bis 5: Ausführungsbeispiele für eine Anzeigendarstellung einer erfindungsgemäßen Anzeigevorrichtung in Bezug auf die in der Figur 2 gezeigte Straße unter verschiedenen Bedingungen.

### Beschreibung des Ausführungsbeispiels

Die erfindungsgemäße Anzeigevorrichtung kann für Systeme verwendet werden, bei denen lediglich dem Fahrer zur Unterstützung eine Spurerkennung in einer Anzeige dargestellt wird. Insbesondere bei schlechten Sichtverhältnissen, wie z.B. nachts oder bei Nebel, kann eine entsprechende Spurdarstellung den Fahrer bei der Wahrnehmung der Fahrspur und damit der Steuerung des Fahrzeugs unterstützen. Der Fahrer kann dann erkennen, wann gegebenenfalls die automatische Spurerkennung schlechter wird, um seine Geschwindigkeit rechtzeitig an eine solche Situation anzupassen. Ferner ist es auch möglich, die erfindungsgemäße Anzeigevorrichtung für Systeme zu verwenden, die den Fahrer bei einem Verlassen seiner Fahrspur warnen. Verschlechtert sich die Spurerkennung, kann der Fahrer erkennen, wann möglicherweise eine Warnung selbst bei einem Spurverlassen nicht mehr erfolgen würde. Der Fahrer kann seine Fahrweise in diesem Fall an die nunmehr fehlende Warnunterstützung anpassen. Ferner ist es auch möglich, die Anzeigevorrichtung in Verbindung mit einem System zu verwenden, bei dem dem Fahrer eine aktive Fahrunterstützung durch eine automatische Steuerung entlang einer erfassten Fahrspur gegeben wird. Durch die erfindungsgemäße Darstellung der Spurmarkierung kann ein Fahrer erkennen, wann sich die Spurerkennung verschlechtert und er gegebenenfalls die Steuerung des Fahrzeugs selbst übernehmen muss.

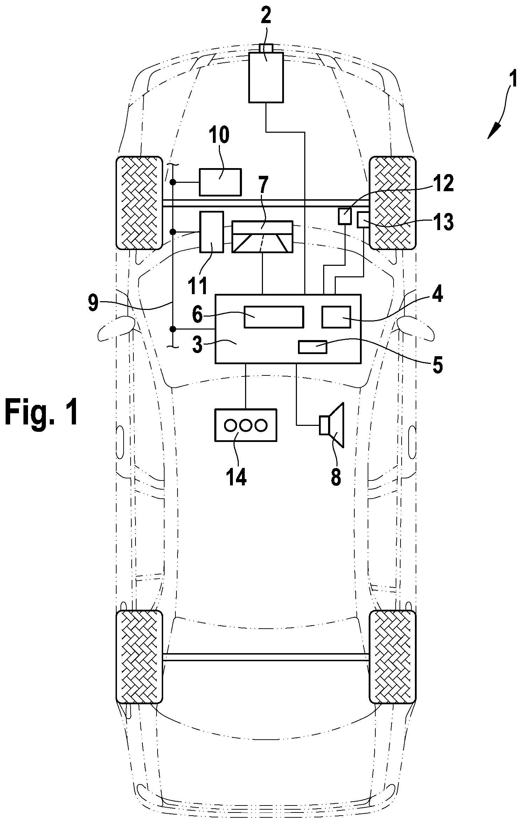

Im Folgenden ist die vorliegende Erfindung am Beispiel eines Fahrzeugs mit einer Spurunterstützung dargestellt, wobei die anderen Ausführungsformen durch Weglassen einer Warnfunktion und/oder einer autonomen Unterstützungsfunktion entsprechend realisiert werden können. In der Figur 1 ist ein Kraftfahrzeug 1 dargestellt, bei dem über einen Videosensor 2 ein Fahrraum vor dem Fahrzeug erfasst wird. Das erfasste Videobild wird an eine Auswerteeinheit 3 weitergeleitet, die über eine erste Recheneinheit 4 verfügt, die das erfasste Videobild auswertet. Der Videosensor 2 ist dabei bevorzugt als eine Infrarot-Kamera ausgeführt, die es auch ermöglicht, bei Nacht oder bei Nebel eine Situation des Fahrraums sicher zu erfassen. Ferner kann jedoch auch eine beliebige andere optische Kameravorrichtung verwendet werden. Weiterhin ist es möglich, die Fahrspurunterstützung durch andere insbesondere optische Sensoren insbesondere an einer Außenseite des Fahrzeugs zu unterstützen, die unmittelbar auf Fahrbahnmarkierungen gerichtet sind. Die erste Recheneinheit 4 wertet das Kamerabild in der Weise aus, indem sie die Fahrspur durch eine rechnerische Bildanalyse des erfassten Bildes und/oder einen Mustervergleich mit dem erfassten Bild bestimmt. In einer weiteren, in der Figur 1 nicht gezeigten Ausführungsform ist es auch möglich, dass ein Straßenverlauf der Fahrtroute in einem Speicher 5 gespeichert ist. Über eine Ortung kann die Position des Fahrzeugs 1 auf der Fahrtroute bestimmt werden und somit ausgehend von der aktuellen Position des Fahrzeugs ein erwarteter Straßenverlauf vorhergesagt und zur Korrelation mit den von dem Videosensor 2 aufgenommen Bilddaten verwendet werden.

Wurde ein Verlauf der Fahrspur bestimmt, so werden die Daten der Fahrspur bzw. von darzustellenden die Fahrspur begrenzenden Spurmarkierungen an eine zweite Recheneinheit 6 in der Auswerteeinheit 3 weitergegeben, die eine Anzeige 7 ansteuert. Zusammen mit den Daten über die Fahrspur wird bevorzugt ein Maß für die Qualität der Fahrtspurerfassung an die zweite Recheneinheit 6 übertragen. In einer ersten Ausführungsform ist die Anzeige 7 als ein sogenanntes Head-Up Display ausgeführt. Hierzu wird z.B. ein virtuelles Bild entweder vor der Windschutzscheibe des Fahrzeugs oder ein reelles Bild auf einer zwischen Fahrer und Windschutzscheibe angeordneten Projektionsscheibe abgebildet. Die von der ersten Recheneinheit 4 berechneten Spurmarkierungen werden dabei insbesondere derart mit der Anzeige 7 vor dem Fahrer dargestellt, dass sie ortskorrekt in dem Bild vor dem Fahrer erscheinen. Hierzu wird rechnerisch die Position der tatsächlichen Straßenmarkierung mit der Projektion der berechneten Spurmarkierung und insbesondere der Beobachtungsposition des Fahrers in Deckung gebracht. In einer weiteren Ausführungsform kann zusätzlich das Bild des Videosensors 2 in das Head-Up Display 7 projiziert werden. Ferner ist es auch möglich, die Anzeige 7 als eine Anzeigeeinheit, z.B. eine Flüssigkristallanzeige, vor dem Fahrer auszuführen. Die Spurmarkierungen werden in diesem Fall in das von dem Videosensor 2 aufgenommene Kamerabild eingetragen und in der Anzeigefläche dargestellt.

Die Qualitätserfassung der Fahrspurerkennung erfolgt bevorzugt in der ersten Recheneinheit 4. Eine Fahrspurerkennung kann dabei z.B. dadurch erfolgen, dass Fahrbahnmarkierungen, die sich durch einen Helligkeits- oder Farbkontrast vom Straßenbelag gut abheben, durch eine Videoanalyse des Bildes ermittelt und aus der Bildposition ein Straßenverlauf und insbesondere auch ein Verlauf einer Fahrspurbegrenzung berechnet wird. Fahrbahnmarkierungen können jedoch z.B. durch Abnutzung, Verschmutzung oder Regen mitunter schlechter erkennbar sein. Als ein Maß für die Qualität einer Fahrspurerkennung kann daher der Helligkeits- oder Farbkontrast definiert werden, den die Fahrbahnmarkierung gegenüber der sie umgebenden Fahrbahnoberfläche aufweist. Ist dieser Kontrast sehr groß, d.h. lässt sich die Markierung gut von dem Untergrund unterscheiden, so liegt eine gute Qualität der Fahrspurerkennung vor. Für eine Einteilung der Qualität der Fahrspurerkennung in eine gute, schlechte und unmögliche Erkennung ist es möglich, beispielsweise einen Helligkeits- oder Farbkontrast zu definieren, der für eine gute oder der zumindest für eine schlechte Erkennung erforderlich ist. Gegebenenfalls lassen sich auch feinere Qualitätsabstufungen mit entsprechenden Grenzen festlegen. Hat sich der Kontrast zwischen der erfassten Markierung und der Umgebung entsprechend vermindert, z.B. indem der Helligkeits- oder Farbkontrast zwischen Markierung und Straßenbelag unter einen vorgegebenen für eine gute Erfassung festgelegten Schwellwert gefallen ist, so ist die Qualität der Fahrspurerkennung möglicherweise fraglich geworden. Zwar kann eine Fahrspur noch erkannt werden, allerdings ist die Erkennung möglicherweise nicht mehr völlig fehlerfrei. In diesem Fall wird eine andere Darstellung der Spurmarkierung gewählt, als bei einer sicheren Erfassung. Gleiches gilt z.B. auch für den Fall, dass die Fahrbahnmarkierung für eine gewisse Strecke unterbrochen ist und daher nicht erfasst werden kann, so dass für den Zwischenraum nur eine Extrapolation der angrenzenden Fahrbahnmarkierungen möglich ist. Auch Witterungsverhältnisse, wie z.B. Regen oder Schnee, können die Fahrspurerfassung negativ beeinflussen. In einer weiteren Ausführungsform kann auch ein Kontrastunterschied zwischen der Fahrbahnoberfläche und einem Fahrbahnrand, z.B. einer Fahrbahnbegrünung, bzw. eines Seitenstreifens oder Bürgersteigs für eine Fahrspurerfassung herangezogen werden, wobei hierbei ebenfalls ein Kontrastunterschied bewertet wird.

Weiterhin ist es auch möglich, dass Fahrbahnbegrenzungsmarkierungen, wie z.B. Seitenpfosten, in die Fahrspurerkennung mit einbezogen werden. Fehlen diese Seitenpfosten, kann ebenfalls die Qualität der Fahrspurerfassung in Frage gestellt sein, sei es dass die Pfosten aufgrund von Verschmutzung nicht erfasst bzw. bei der Bildverarbeitung nicht isoliert werden können bzw. dass diese Seitenpfosten nicht am Straßenrand vorhanden sind. Werden Seitenpfosten detektiert, wird eine hohe Qualität der Spurerfassung festgestellt. Wird nur eine Fahrspur erfasst, so wird die Qualität auf ein kritisches Maß herabgesetzt, wobei die anhand der Fahrbahnmarkierung erfasste Fahrspur dennoch in die Anzeige eingetragen wird.

Ferner ist es auch möglich, dass eine Fahrbahnmarkierung völlig fehlt oder von der Kamera nicht mehr von der Straßenumgebung unterschieden werden kann. Gleiches gilt auch für den Fall, wenn mehrere sich widersprechende Fahrbahnmarkierungen aufgetragen sind. In diesem Fall ist eine Darstellung einer Spurmarkierung nicht möglich, so dass eine entsprechende Darstellung ganz abgeschaltet wird.

Wird eine verringerte Qualität einer Fahrspurerfassung festgestellt, so kann in einer Ausführungsform über einen Lautsprecher 8 ein akustisches Warnsignal ausgegeben werden. Der Fahrer erhält somit eine zusätzliche Rückmeldung dazu, dass die Fahrspurerfassung möglicherweise fehlerhaft ist. In einer weiteren Ausführungsform kann auch bei einem Verlassen der Fahrspur über den Lautsprecher 8 dem Fahrer eine akustische Warnung ausgegeben werden.

Bei dem in Figur 1 dargestellten Ausführungsbeispiel dient die Auswerteeinheit 3 auch der automatischen Steuerung des Fahrzeugs. Hierzu ist die Auswerteeinheit 3 an einen Datenbus 9 angeschlossen, der insbesondere einen Fahrzeugantrieb 10 und eine Fahrzeuglenkung 11 steuert. Das Fahrzeug wird über die Einheiten 10, 11 entlang der von der ersten Recheneinheit 4 ermittelten Fahrstrecke geführt. Zur Kontrolle wird ein Lenkwinkel des Fahrzeugs über einen Lenkwinkelsensor 12 und eine zurückgelegte Fahrstrecke über einen Radsensor 13 erfasst. Über eine Bedieneinheit 14 kann ein Fahrer eine automatische Steuerung aktivieren, aber auch deaktivieren. Wird die Fahrspur schlechter erfasst, so wird dies in der Anzeige durch eine Veränderung der Darstellung der Spurmarkierung angezeigt. Ein Fahrer kann nun entweder selber wieder die Steuerung übernehmen, kann aber auch darauf warten, dass sich entweder die Fahrspurerkennung wieder verbessert, was er in der Anzeige unmittelbar erkennen würde. Ferner kann er aber auch darauf warten, dass das Fahrzeug die Steuerung an ihn automatisch zurückgibt. Zumindest ist er durch die geänderte Anzeige der Spurmarkierung bei einer verschlechterten Fahrspurerkennung vorgewarnt, dass eine entsprechende automatische Steuerung gegebenenfalls nicht weiter möglich ist.

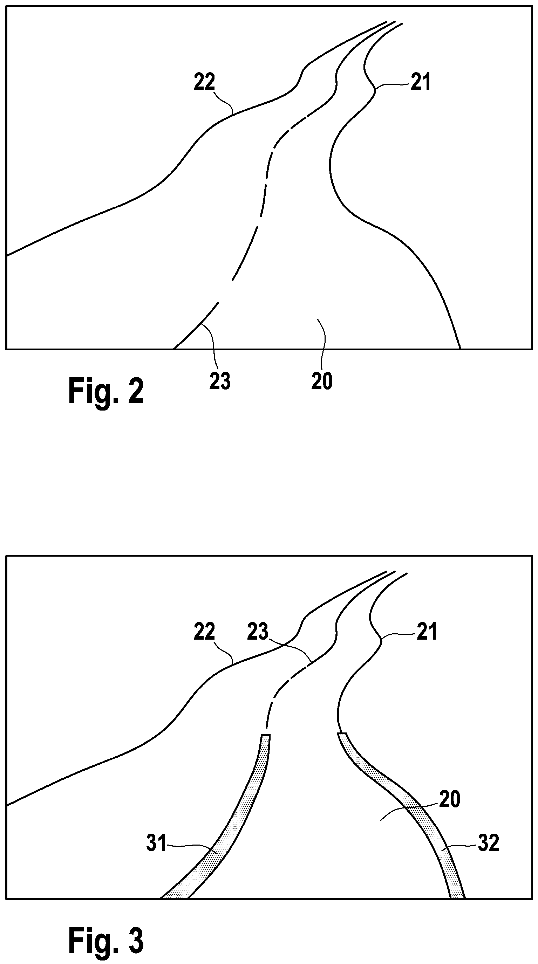

In der Figur 2 ist ein Straßenverlauf 20 mit einer die Straße rechts begrenzenden ersten Straßenmarkierung 21 und einer die Straße links begrenzenden zweiten Straßenmarkierung 22 dargestellt. Ferner weist die Straße einen Mittelstreifen 23 auf. In den folgenden Figuren 3, 4 und 5 ist eine Einblendung einer Spurmarkierung in erfindungsgemäßer Weise in Bezug auf den Straßenverlauf 20 in der Figur 2 erläutert.

In der Figur 3 sind eine berechnete erste Spurmarkierung 31 und eine zweite Spurmarkierung 32 in Bezug auf den Straßenverlauf 20 eingetragen. Die Darstellung der Spurmarkierung 31, 32 kann dabei entweder in Bezug auf den tatsächlich für den Fahrer sichtbaren Straßenverlauf 20, aber auch in Bezug auf eine Bilddarstellung des Straßenverlaufs 20 erfolgen. Durch die Auswertung mittels der ersten Recheneinheit 4 wurde insbesondere der Mittelstreifen 23 und die rechte Fahrbahnmarkierung 21 in einem bestimmten Bereich vor dem Fahrzeug sicher erkannt. Diese Information wurde an die zweite Recheneinheit 6 übermittelt, so dass diese eine entsprechende Darstellung der Spurmarkierungen wählt. Zur Anzeige einer hohen Qualität der Fahrspurerkennung werden in diesem Ausführungsbeispiel die Spurmarkierungen 31, 32 als breite, durchgezogene Linien in das Bild des Straßenverlaufs eingezeichnet. Die Eintragung erfolgt dabei in der Weise, dass sich die Spurmarkierungen 31, 32 jeweils mit dem Mittelstreifen und dem rechten Straßenverlauf ungefähr decken. Entsprechend der Erkennung werden die Spurmarkierungen 31, 32 in einem Bereich von etwa 100m vor dem Fahrzeug in die Bilddarstellung eingetragen. Die Spurmarkierungen können dabei bevorzugt derart eingetragen werden, dass sie einen hohen Kontrast gegenüber der Fahrbahn des Straßenverlaufs 20 aufweisen. So können sie z.B. in weiß eingetragen werden.

In einer weiteren Ausführungsform ist es auch möglich, den Spurmarkierungen 31, 32 eine im Bezug auf die Qualität der Fahrbahnerkennung zugeordnete Farbe zuzuweisen. So werden z.B. die Spurmarkierungen 31, 32 in grün eingetragen, weil der Straßenverlauf 20 gut erkannt werden kann. Verschlechtert sich dagegen die Erkennung, so können die Spurmarkierungen 31, 32 z.B. in gelb oder bei einer noch weiteren Verschlechterung in rot in das Bild eingetragen werden.

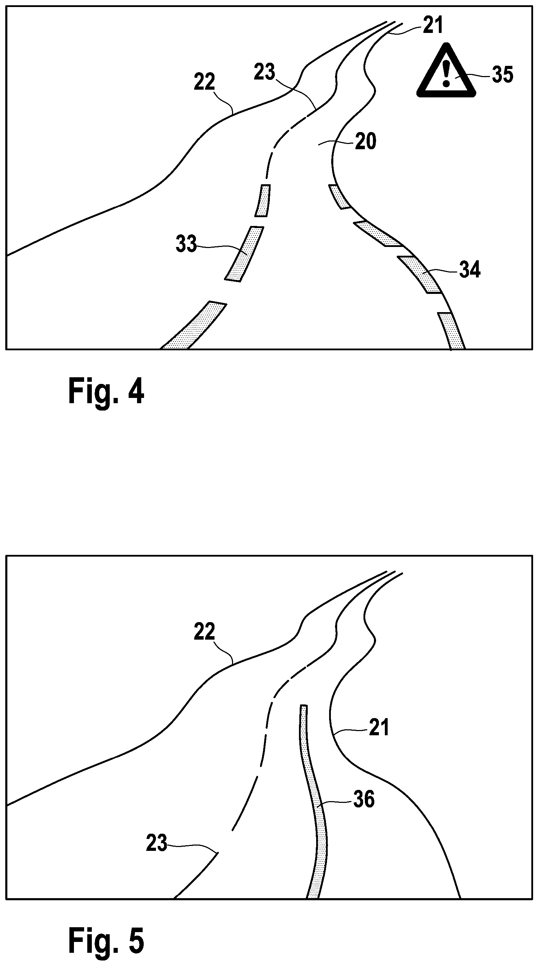

In der Figur 4 ist ein weiteres Ausführungsbeispiel für eine Darstellung von Spurmarkierungen bei einer verschlechterten Fahrspurerkennung dargestellt. Anstelle von durchgezogenen Linien gemäß der Figur 3 sind in der Figur 4 eine erste Spurmarkierung 33 und eine zweite Spurmarkierung 34 als gestrichelte Linien eingetragen, da sich die Qualität der Fahrspurerkennung in dieser Situation gegenüber der Darstellung in der Figur 3 verschlechtert hat, z.B. aufgrund eines geringeren erfassten Kontrastes zwischen der Markierung und der Fahrbahn. Diese Information wurde z.B. bei der Bildanalyse durch die erste Recheneinheit 4 festgestellt und an die zweite Recheneinheit 6 übermittelt. Ein Fahrer erhält somit durch die geränderte Darstellung der Fahrspurmarkierung eine Rückmeldung darüber, dass die Auswerteeinheit 3 zwar aus ihrer Erfassung heraus noch eine entsprechende Fahrspur entsprechend der Markierungen 21, 23 erkennen kann, dass hierbei jedoch möglicherweise kleinere Fehler aufgetreten sind bzw. eine Zuverlässigkeitsgrenze, wie z.B. ein vorgegebener erforderlicher Kontrast zwischen Fahrbahnmarkierung und Straße, unterschritten wurde. Ergänzend kann zusätzlich ein Warnsymbol 35 in die Anzeige eingetragen werden und den Fahrer auf eine schlechtere Fahrspurerkennung hinweisen.

In der Figur 5 ist ein weiteres Ausführungsbeispiel für eine Darstellung gezeigt, bei der sich eine Spurmarkierung nicht mit der Markierung für den rechten Straßenrand 21 und dem Mittelstreifen 23 überdeckt, sondern in die Mitte der Fahrspur zwischen den beiden Begrenzungen 21, 23 eingetragen wird. Der Fahrer kann somit entlang der Mittelmarkierung 36 sein Fahrzeug steuern. Entsprechend der Darstellung gemäß den Figuren 3 und 4 kann auch hier durch eine farblich veränderte, gestrichelte und/oder anderweitig unterbrochene Darstellung einer Spurmarkierung auf die Qualität der Fahrspurerkennung hingewiesen werden. Gleiches gilt im Bezug auf eine Einfärbung der Mittelmarkierung 36.

Anstelle einer wie in den Figuren 3 bis 5 gezeigten Spurmarkierung in Form von Linien ist es auch möglich, stattdessen die Fahrbahnfläche zwischen den Markierungen 21, 23 in der Anzeige durch eine geschlossene Fläche auszufüllen. Diese Fläche kann ebenfalls entsprechend eingefärbt und/oder mit Unterbrechungen versehen werden, so dass einzelne Balkenabschnitte entstehen, wenn die Fahrbahnerkennung unzureichend ist.

## Patentansprüche

1. Anzeigevorrichtung mit einer Erfassungseinrichtung (2) zur Erfassung einer Fahrspur, mit einer Anzeige (7) und mit einer Auswerteeinheit (3) eingerichtet zur Berechnung einer Spurmarkierung zu einer derartigen Darstellung der Spurmarkierung in der Anzeige (7), dass die Art der Darstellung der Spurmarkierung eine Qualität der Erfassung der Fahrspur angibt.

2. Anzeigevorrichtung nach Anspruch 1, **gekennzeichnet durch** eine Recheneinheit zur Berechnung der Spurmarkierung derart, dass die Spurmarkierung in der Anzeige derart dargestellt wird, dass sie für einen Fahrer an Stelle einer tatsächlichen Spurmarkierung dargestellt ist.

3. Anzeigevorrichtung nach einem der vorherigen Ansprüche, **dadurch gekennzeichnet, dass** die Anzeige (7) als eine Head-Up Anzeige ausgeführt ist und dass die Spurmarkierung in der Head-Up Anzeige derart projiziert wird, dass sie für den Fahrer in dem Fahrraum vor dem Fahrzeug erscheint.

4. Anzeigevorrichtung nach einem der vorherigen Ansprüche, **gekennzeichnet durch** eine Kamera zur Erfassung des Fahrraums vor dem Fahrzeug, wobei das Kamerabild in der Anzeige dargestellt wird und die Spurmarkierung in das Kamerabild eingetragen wird.

5. Anzeigevorrichtung nach einem der vorherigen Ansprüche, **gekennzeichnet durch** eine Warneinheit zur optischen und/oder akustischen Warnung bei einem Abfall der Qualität der Erfassung der Fahrspur unter ein vorgegebenes Maß.

6. Anzeigevorrichtung nach einem der vorherigen Ansprüche, **dadurch gekennzeichnet, dass** die Spurmarkierung mit einer der Qualität der Fahrspurerkennung entsprechenden Farbe und/oder Strichart in der Anzeige dargestellt ist.

7. Verfahren zur Anzeige einer Spurmarkierung in einer Anzeige in einem Fahrzeug, wobei eine Fahrspur vor dem Fahrzeug ermittelt wird, **dadurch gekennzeichnet, dass** eine der Fahrspur entsprechende Spurmarkierung in der Anzeige derart dargestellt wird, dass mit der Art der Darstellung der Spurmarkierung eine Qualität der Fahrspurerkennung gekennzeichnet wird.

8. Verfahren nach Anspruch 7, **dadurch gekennzeichnet, dass** als eine Spurmarkierung eine Spurbegrenzungsmarkierung in die Anzeige eingetragen wird.

9. Verfahren nach einem der Ansprüche 7-8, **dadurch gekennzeichnet, dass** als eine Spurmarkierung eine Mitte einer Fahrspur in die Anzeige eingetragen wird.

10. Verfahren nach einem der Ansprüche 7-9, **dadurch gekennzeichnet, dass** zur Kennzeichnung der Qualität der Fahrspurerkennung eine Farbe und/oder eine Strichdarstellung einer Spurmarkierung variiert werden.

11. Verfahren nach einem der Ansprüche 7-10, **dadurch gekennzeichnet, dass** bei einer Verschlechterung der Fahrspurerkennung eine zusätzliche optische und/oder akustische Warnung ausgegeben wird.

## Claims

1. Display apparatus having a capture device (2) for capturing a lane, having a display (7) and having an evaluation unit (3) set up to calculate a lane marking for presenting the lane marking on the display (7) such that the type of presentation of the lane marking indicates a quality with which the lane is captured.

2. Display apparatus according to Claim 1, **characterized by** a computing unit for calculating the lane marking such that the lane marking is presented on the display in such a manner that it is presented for a driver in place of an actual lane marking.

3. Display apparatus according to one of the preceding claims, **characterized in that** the display (7) is in the form of a head-up display, and **in that** the lane marking is projected onto the head-up display in such a manner that it appears to the driver in the driving area in front of the vehicle.

4. Display apparatus according to one of the preceding claims, **characterized by** a camera for capturing the driving area in front of the vehicle, wherein the camera image is presented on the display and the lane marking is entered in the camera image.

5. Display apparatus according to one of the preceding claims, **characterized by** a warning unit for optically and/or acoustically warning if the quality with which the lane is captured falls below a predefined amount.

6. Display apparatus according to one of the preceding claims, **characterized in that** the lane marking is presented on the display with a colour and/or type of line corresponding to the quality with which the lane is detected.

7. Method for displaying a lane marking on a display in a vehicle, wherein a lane in front of the vehicle is determined, **characterized in that** a lane marking corresponding to the lane is presented on the display in such a manner that a quality with which the lane is detected is indicated with the type of presentation of the lane marking.

8. Method according to Claim 7, **characterized in that** a lane boundary marking is entered in the display as a lane marking.

9. Method according to one of Claims 7-8, **characterized in that** a centre of a lane is entered in the display as a lane marking.

10. Method according to one of Claims 7-9, **characterized in that** a colour and/or a line representation of a lane marking is/are varied in order to indicate the quality with which the lane is detected.

11. Method according to one of Claims 7-10, **characterized in that** an additional optical and/or acoustic warning is output in the event of a deterioration in the detection of the lane.

## Revendications

1. Dispositif d'affichage comprenant un moyen de détection (2) destiné à détecter une voie, un affichage (7) et une unité d'évaluation (3) conçue pour calculer un marquage de voie afin de représenter le marquage de voie sur l'affichage (7) de telle sorte que la manière de représenter le marquage de voie indique une qualité de détection de la voie.

2. Dispositif d'affichage selon la revendication 1, **caractérisé par** une unité de calcul destinée à calculer le marquage de voie de telle manière que le marquage de voie soit présenté sur l'affichage à un conducteur au lieu d'un marquage de voie réel.

3. Dispositif d'affichage selon l'une des revendications précédentes, **caractérisé en ce que** l'affichage (7) est réalisé sous la forme d'un affichage tête haute et **en ce que** le marquage de voie sur l'affichage tête haute est projeté de manière à ce qu'il soit visible par le conducteur dans l'espace de conduite situé à l'avant du véhicule.

4. Dispositif d'affichage selon l'une quelconque des revendications précédentes, **caractérisé par** une caméra destinée à détecter l'espace de conduite situé à l'avant du véhicule, dans lequel l'image fournie par la caméra est affichée sur l'affichage et le marquage de voie est introduit dans l'image fournie par la caméra.

5. Dispositif d'affichage selon l'une des revendications précédentes, **caractérisé par** une unité d'avertissement destinée à émettre un avertissement optique et/ou acoustique lorsque la qualité de la détection de voie devient inférieure à un niveau prédéterminé.

6. Dispositif d'affichage selon l'une des revendications précédentes, **caractérisé en ce que** le marquage de voie est affiché avec une couleur et/ou un type de ligne correspondant à la qualité de la reconnaissance de voie.

7. Procédé d'affichage d'un marquage de voie sur un affichage dans un véhicule, dans lequel une voie est déterminée à l'avant du véhicule, **caractérisé en ce qu'**un marquage de voie correspondant à la voie est représenté de telle manière qu'une qualité de reconnaissance de voie soit indiquée par le type de représentation du marquage de voie.

8. Procédé selon la revendication 7, **caractérisé en ce qu'**un marquage de limite entre voies est introduit dans l'affichage en tant que marquage de voie.

9. Procédé selon l'une des revendications 7-8, **caractérisé en ce qu'**un centre d'une voie est introduit dans l'affichage en tant que marquage de voie.

10. Procédé selon l'une des revendications 7-9, **caractérisé en ce qu'**une couleur et/ou une représentation sous forme de traits d'un marquage de voie sont modifiées pour indiquer la qualité de la reconnaissance de voie.

11. Procédé selon l'une des revendications 7-10, **caractérisé en ce qu'**un avertissement optique et/ou acoustique supplémentaire est émis si la reconnaissance de voie se détériore.
